Europäisches Patentamt

European Patent Office

Office européen des brevets

(19)

(11) Veröffentlichungsnummer: **0 090 127**
**A1**

# (12) EUROPÄISCHE PATENTANMELDUNG

(21) Anmeldenummer: **83100203.5**

(22) Anmeldetag: **12.01.83**

(51) Int. Cl.³: **B 01 D 53/14, C 10 K 1/12**

(30) Priorität: **12.02.82 DE 3204907**

(43) Veröffentlichungstag der Anmeldung: **05.10.83**
**Patentblatt 83/40**

(84) Benannte Vertragsstaaten: **BE FR GB IT LU NL**

(71) Anmelder: **Dr. C. Otto & Comp. Gesellschaft mit beschränkter Haftung, Christstrasse 9, D-4630 Bochum 1 (DE)**

(72) Erfinder: **Ritter, Horst, Bergebuschstrasse 12, D-4300 Essen (DE)**
Erfinder: **Herpers, Edmund-Theo, Dr. Dipl.-Chem., Am Acker 18, D-4630 Bochum (DE)**

(74) Vertreter: **Radt, Finkener, Ernesti Patentanwälte, Heinrich-König-Strasse 119, D-4630 Bochum 1 (DE)**

(54) **Verfahren zum Entfernen von Schwefelwasserstoff aus Gasen, insbesondere Kohlendestillationsgasen.**

(57) Nach diesem Verfahren wird der Schwefelwasserstoff zunächst mit Ammoniakwasser (4) und in einer Feinreinigungsstufe (6) mit Natron- oder Kalilauge (8) entfernt, wobei aus dem Feinreinigungskreislauf ein Teilstrom (10) abgezweigt und in eine Strippkolonne (7) geleitet wird, in der das Sulfid aus der Alkaliverbindung mit kohlensäurehaltigen Brüden (12) aus dem $NH_3$-Abtreiber abgetrieben wird, so daß Natrium- bzw. Kaliumkarbonat entsteht, und wobei ferner die Brüden aus der Strippkolonne (7) einem Entsäurer (15) zugeführt werden. Ein Teilstrom (9) der am Ausgang der Strippkolonne (7) anfallenden wäßrigen Karbonatlösung wird gekühlt und zum Gaswascher (2) zurückgeführt und dort zur weiteren $H_2S$-Wäsche eingesetzt (5). Dies führt zu einer wesentlich besseren Ausnutzung der eingesetzten Natronlauge.

Ein anderer Teilstrom (13) der wäßrigen Karbonatlösung, die am Ausgang der Strippkolonne (7) anfällt und deren Temperatur etwa 100 °C beträgt, wird in einem Abtreiber (11) dem Kohlewasser beigemischt, welches dem $NH_3$-Abtreiber zugeführt wird. Auf diese Weise gelangen keine sulfidischen Verbindungen ins Abwasser.

Radt, Finkener, Ernesti
Patentanwälte
Heinrich-König-Straße 119
4630 Bochum 1
Fernsprecher (02 34) 477 27/28
Telegrammadresse: Radtpatent Bochum
Telex: 8 25769 radt d

82 902 WE/IL

0090127

Verfahren zum Entfernen von Schwefelwasserstoff aus Gasen, insbesondere Kohlendestillationsgasen

- 1 -

Die Erfindung betrifft ein Verfahren zum Entfernen von Schwefelwasserstoff aus Gasen, insbesondere Kohlendestillationsgasen, mit Ammoniakwasser und in einer Feinreinigungsstufe mit Natron- oder Kalilauge, vorzugsweise mit einer Konzentration von etwa 3 bis 5 % NaOH,

Es ist bekannt, Schwefelwasserstoff aus Gasen mit $NH_3$-haltigen Waschlösungen auszuwaschen und nach der Grobwäsche eine Feinreinigung mit Natronlauge vorzunehmen. Weiterhin ist es bekannt, bei der Reinigung von Kohlendestillationsgasen bei Anwendung der vorgenannten Verfahren, die ausgebrauchte sulfidische Natronlauge direkt zum Abtreiben fixer $NH_3$-Verbindungen zu benutzen.

Der Erfindung liegt die Aufgabe zugrunde, bei der Entfernung von Schwefelwasserstoff aus Gasen mit Ammoniakwasser eine wesentlich bessere Ausnutzung der Natronlauge zu erreichen und zugleich dafür zu sorgen, daß keine sulfidischen Bestandteile ins Abwasser gelangen.

Ausgehend von einem Verfahren in der eingangs beschriebenen Art besteht die Erfindung darin, daß aus dem Feinreinigungskreislauf ein Teilstrom abgezweigt und in eine Strippkolonne geleitet wird, in der das Sulfid aus der Alkaliverbindung mit kohlensäurehaltigen Brüden aus dem $NH_3$-Abtreiber abgetrieben wird, so daß Natrium- bzw. Kaliumkarbonat entsteht, und daß die Brüden aus der Strippkolonne einem Entsäurer zugeführt werden.

Eine vorteilhafte Weiterbildung besteht darin, daß ein Teilstrom der am Ausgang der Strippkolonne anfallenden wässrigen Karbonatlösung gekühlt und zum Gaswascher zurückgeführt und dort zur weiteren $H_2S$-Wäsche eingesetzt wird.

Wie sich gezeigt hat, wird durch die zweimalige Abtreibung der beladenen "Natronlauge" zuerst im Stripper und dann im Abtreiber durch $CO_2$-haltigen Wasserdampf eine wesentlich bessere Ausnutzung der eingesetzten Natronlauge erreicht.

Nach einer anderen Weiterbildung der Erfindung ist es zweckmäßig einen anderen Teilstrom der wässrigen Karbonatlösung, die am Ausgang der Strippkolonne anfällt und deren Temperatur etwa $100^o$ C beträgt, den im Kohlewasser vorhandenen fixen Ammoniakverbindungen beizumischen. Auf diese Weise ist sichergestellt, daß keine sulfidischen Verbindungen ins Abwasser gelangen.

Eine andere zweckmäßige Weiterbildung der Erfindung besteht darin, daß das Gas im Gaswascher in zwei aufeinanderfolgenden Feinwaschstufen gewaschen wird, wobei eine Stufe nur mit der frisch aufgegebenen Natron- bzw. Kalilauge und die andere Stufe mit der rückgeführten Karbonatlösung betrieben wird.

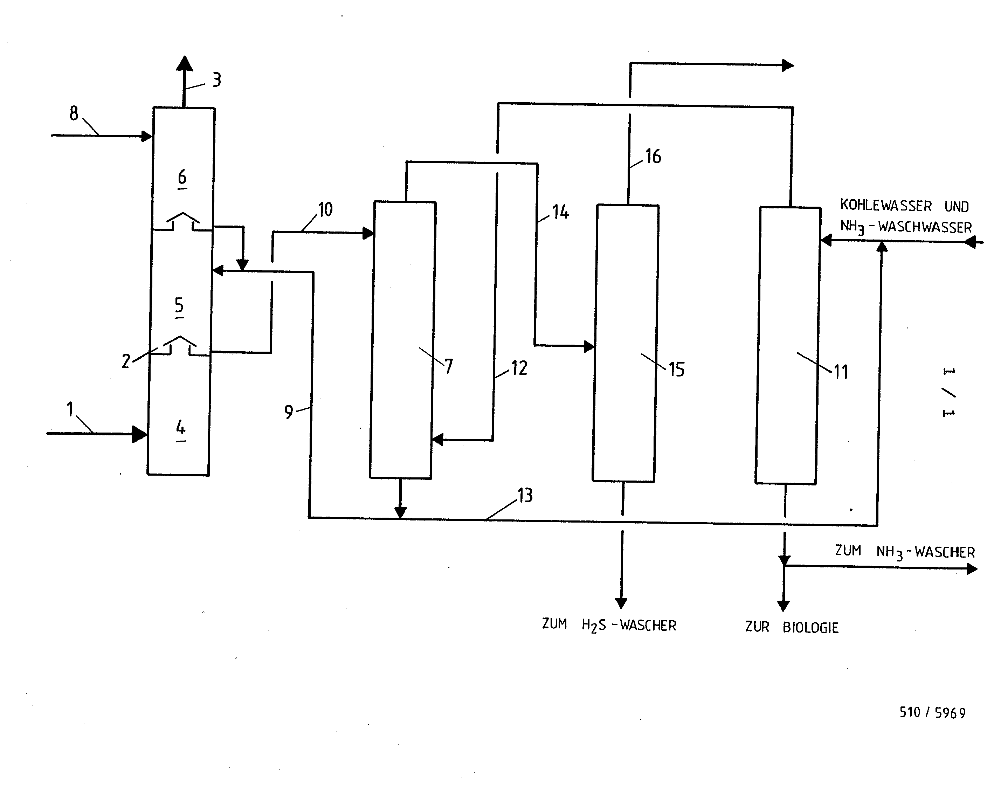

Nachstehend wird ein Ausführungsbeispiel der Erfindung anhand der Zeichnung, in der der Verfahrensablauf schematisch dargestellt ist, erläutert.

Das zu reinigende Rohgas tritt durch die Leitung 1 in den Wascher 2 ein und verläßt ihn am oberen Ende über die Leitung 3. Dem im unteren Teil des Waschers 2 befindlichen Vorwascher 4 sind im oberen Teil zwei Feinwaschstufen 5, 6 nachgeschaltet. In der Feinwaschstufe 5 wird das Gas zunächst mit der aus dem $H_2S$/HCN-Stripper 7 zugeführten schwach konzentrierten, vorwiegend Natriumkarbonat enthaltenden Waschlösung gewaschen, die zur Erhöhung der Berieselungsdichte zweckmäßigerweise umgewälzt wird. Anschließend erfolgt eine weitere Reinigung mit einer über die Leitung 8 zugeführten verdünnten

0090127

Natronlauge in der oberen Feinwaschstufe 6. Hierbei handelt es sich um eine verdünnte wässrige Natronlauge (ca. 3 bis 5 %ige), die ebenfalls zur Erhöhung der Berieselungsdichte umgewälzt wird. Entsprechend der Aufgabemenge wird eine gleichgroße Menge über einen Überlauf an die darunter liegende Feinwaschstufe 5 abgegeben.

Da im Koksofengas neben Schwefelwasserstoff und Cyanwasserstoff ein verhältnismäßig hoher Anteil an Kohlendioxid enthalten ist, wird ein gewisser Teil der Natronlauge in der Feinwaschstufe 6 für die Auswaschung dieser Komponente verbraucht. Das dabei sich bildende Natriumkarbonat ist aber nun keineswegs für die Entschwefelung verloren. Vielmehr wird es in der darunterliegenden Feinwaschstufe 5 für die $H_2S$-Auswaschung weiter eingesetzt.

Zur Unterstützung der Entschwefelung und Entcyanisierung wird aus dem $H_2S$-/HCN-Stripper 7, wie erwähnt, über eine Leitung 9 Natriumkarbonat-Lösung in den Wascher 2 zurückgeführt und hier dem Teilstrom aus der Feinwaschstufe 6 zugemischt und in der Feinwaschstufe 5 umgewälzt. Der rückgeführte Strom wird vor der Einleitung in den Wascher 2 über einen nicht dargestellten Kühler geführt.

Die angereicherte Waschlösung, die im unteren Teil der Feinwaschstufe 5 anfällt, wird über eine Leitung 10 nach der Aufwärmung in einem nicht dargestellten Wärmetauscher auf den Kopf des $H_2S$-/HCN-Strippers 7 aufgegeben.

In das Unterteil des Strippers 7 werden die $CO_2$-haltigen und wasserdampfgesättigten Brüden aus dem Kohlewasserabtreiber 11 über eine Leitung 12 eingeleitet. Das Kohlendioxid der Brüden treibt nun aus der Waschlösung den Schwefelwasserstoff und den Cyanwasserstoff weitgehend heraus. Die regenerierte Waschlösung wird am Ausgang des Strippers 7 in zwei Teilströme aufgeteilt, von denen ein erster Teilstrom über die Leitung 9 zur Feinwaschstufe 5 gelangt, während der andere Teilstrom über eine Leitung 13 zum Abtrieb der fixen Ammoniakverbindungen auf den Kopf des Kohlewasserabtreibers 11 aufgegeben wird.

Die am Kopf des $H_2S$-/HCN-Strippers 7 austretenden Brüden werden über eine Leitung 14 dem Entsäurer 15 zugeführt, wobei ihr Wärmeinhalt für den Abtrieb der sauren Komponente ausgenutzt wird. Die Brüden aus dem Entsäurer 15 gelangen über eine Leitung 16 zu einer $H_2SO_4$- bzw. Clausanlage, wobei durch den geringen $CO_2$-Gehalt dieser Brüden eine Entlastung der nachgeschalteten Anlage gegenüber einem herkömmlichen Verfahren eintritt.

Durch die Verwendung von Natriumkarbonat anstelle von Natriumsulfiden/-bisulfiden zum Abtrieb der fixen $NH_3$-Verbindungen ist auch das Abwasser des Kohlewasserabtreibers 11 frei von Sulfiden, d.h. daß eine Entlastung des Abwassers gegeben ist.

Da Natriumkarbonat wie Natronlauge ebenfalls $H_2S$ und HCN aus dem Gas aufnimmt, wird der Ausnutzungsgrad der eingesetzten Natronlauge insgesamt erheblich erhöht.

Radt, Finkener, Ernesti
Patentanwälte

Heinrich-König-Straße 119
4630 Bochum 1
Fernsprecher (02 34) 47727/28
Telegrammadresse: Radtpatent Bochum
Telex: 825769 radt d

82 902
WE/IL

Verfahren zum Entfernen von Schwefelwasserstoff aus
Gasen, insbesondere Kohlendestillationsgasen

Patentansprüche

1. Verfahren zum Entfernen von Schwefelwasserstoff aus
Gasen, insbesondere Kohlendestillationsgasen, mit Ammoniakwasser und in einer Feinreinigungsstufe mit Natron-
oder Kalilauge, vorzugsweise mit einer Konzentration von
etwa 3 bis 5 % NaOH, d a d u r c h   g e k e n n -
z e i c h n e t, daß aus dem Feinreinigungskreislauf
ein Teilstrom abgezweigt und in eine Strippkolonne geleitet wird, in der das Sulfid aus der Alkaliverbindung
mit kohlensäurehaltigen Brüden aus dem $NH_3$-Abtreiber
abgetrieben wird, so daß Natrium- bzw. Kaliumkarbonat
entsteht, und daß die Brüden aus der Strippkolonne einem
Entsäurer zugeführt werden.

2. Verfahren nach Anspruch 1, dadurch gekennzeichnet,
daß ein Teilstrom der der am Ausgang der Strippkolonne
anfallenden wässrigen Karbonatlösung gekühlt und zum
Gaswascher zurückgeführt und dort zur weiteren $H_2S$-Wä-
sche eingesetzt wird.

3. Verfahren nach den Ansprüchen 1 und 2, dadurch gekennzeichnet, daß ein Teilstrom der wässrigen Karbonatlösung, die am Ausgang der Strippkolonne anfällt und
deren Temperatur etwa 100° C beträgt, dem Kohlewasser
beigemischt wird, welches dem $NH_3$-Abtreiber zugeführt
wird.

0090127

4. Verfahren nach einem der Ansprüche 1 bis 3, dadurch gekennzeichnet, daß das Gas im Gaswascher in zwei aufeinanderfolgenden Feinwaschstufen gewaschen wird, wobei eine Stufe nur mit der frisch aufgegebenen Natron- bzw. Kalilauge und die andere Stufe mit der rückgeführten Karbonatlösung betrieben wird.

5. Verfahren nach Anspruch 4, dadurch gekennzeichnet, daß das aus der zweiten Feinwaschstufe anfallende Natriumkarbonat zusammen mit der rückgeführten Karbonatlösung in der ersten Feinwaschstufe eingesetzt wird.

KOHLEWASSER UND NH₃ - WASCHWASSER

ZUM H₂S - WASCHER

ZUR BIOLOGIE

ZUM NH₃ - WASCHER

1 / 1

0090127

510 / 5969

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 734 497 (RUHRKOHLE AG)<br><br>* Anspruch 1; Seite 11, Zeilen 6-21; Seite 13, Zeilen 1-5; Abbildung *<br><br>--- | 1,2,4, 5 | B 01 D 53/14<br>C 10 K 1/12 |
| A | DE-A-2 917 780 (FA. C. STILL)<br>* Ansprüche 1, 2; Abbildung *<br><br>--- | 1,3 | |
| A | DE-A-3 004 757 (RUHRKOHLE AG)<br><br>* Ansprüche 1-3; Abbildung *<br><br>----- | | |

| | | |
|---|---|---|
| | | **RECHERCHIERTE SACHGEBIETE (Int. Cl. ³)**<br><br>B 01 D 53/00<br>C 10 K 1/00 |

Der vorliegende Recherchenbericht wurde für alle Patentansprüche erstellt.

| Recherchenort<br>BERLIN | Abschlußdatum der Recherche<br>26-05-1983 | Prüfer<br>BERTRAM H E H |
|---|---|---|